Europäisches Patentamt

European Patent Office

Office européen des brevets

(11) Veröffentlichungsnummer: **0 419 525 B1**

(12) **EUROPÄISCHE PATENTSCHRIFT**

(45) Veröffentlichungstag der Patentschrift: **29.09.93**

(51) Int. Cl.⁵: **G01J 1/42**, H01S 3/00

(21) Anmeldenummer: **89906728.4**

(22) Anmeldetag: **16.06.89**

(86) Internationale Anmeldenummer:
**PCT/DE89/00402**

(87) Internationale Veröffentlichungsnummer:
**WO 89/12806 (28.12.89 89/30)**

(54) **VORRICHTUNG ZUR MESSUNG DER STRAHLUNGSLEISTUNG VON LASERN.**

(30) Priorität: **17.06.88 DE 3820619**

(43) Veröffentlichungstag der Anmeldung:
**03.04.91 Patentblatt 91/14**

(45) Bekanntmachung des Hinweises auf die
Patenterteilung:
**29.09.93 Patentblatt 93/39**

(84) Benannte Vertragsstaaten:
**FR IT**

(56) Entgegenhaltungen:
**DE-A- 3 002 558**
**GB-A- 2 107 862**

**Sensors and Actuators, Band 5, Nr. 3, Mai 1984, Elsevier Sequoia (Lausanne, CH), A.Shaulov: "Broad band infrared thermal detector", Seiten 207-215.**

**Patent Abstracts of Japan, Band 8, Nr. 183 (P-296)(1620), 23. August 1984; & JP A 5973739**

(73) Patentinhaber: **FRAUNHOFER-GESELLSCHAFT ZUR FÖRDERUNG DER ANGEWANDTEN FOR-SCHUNG E.V.**
**Leonrodstrasse 54**
**D-80636 München 19(DE)**

(72) Erfinder: **LOOSEN, Peter**
**Dorfstrasse 25 a**
**D-5100 Aachen(DE)**
Erfinder: **STURM, Volker**
**Paulinenstrasse 2**
**D-5102 Würselen(DE)**
Erfinder: **DRENKER, Alexander**
**Wiesenstrasse 22**
**D-5100 Aachen(DE)**

(74) Vertreter: **Eichler, Peter et al**
**Patentanwälte Dr.-Ing.Dipl.-Phys. H. Sturies Dipl.-Ing. P. Eichler, Postfach 20 18 31, Brahmstrasse 29**
**D-42218 Wuppertal (DE)**

Patent Abstracts of Japan, Band 6, Nr. 195 (P-146)(1073), 5. Oktober 1982; & JP A 57104828

Journal of Physics E: Scientific Instruments, Band 6, Nr. 2, Februar 1973, S.R. Gunn: "Calorimetric measurements of laser energy and power", Seiten 105-114.

Feinwerktechnik und Messtechnik, Band 92, Nr. 1, Januar/Februar 1984, (München, DE), P. Loosen et al.: "Werkstoffbearbeitung mit Laserstrahlung", Seiten 11-15.

The Review of Scientific Instruments, Band 42, Nr. 1, Januar 1971, J.L. Lachambre: "A pyroelectric energy meter", Seiten 74-77.

Electronic Engineering, Band 59, Nr. 730, Oktober 1987, (Woolwich, London, GB), "Preamp for a pyroelectric detector", Seiten 32, 36

**Beschreibung**

Die Erfindung bezieht sich auf eine Vorrichtung zur Messung der Strahlungsleistung von Lasern, insbesondere von Infrarotlasern, mit einer die Laserstrahlung örtlich integrierenden Einrichtung zweier Detektoren, von denen der erste eine gegenüber dem zweiten hohe Grenzfrequenz hat, und die jeweils für einen unterschiedlichen Frequenzbereich der Laserleistungsänderung dem auf sie entfallenden Strahlungsanteil entsprechende Meßsignale abgeben, und mit einer zusammenfassenden Schaltung für diese Meßsignale.

Für eine Vielzahl von Bearbeitungsprozessen ist die genaue Kenntnis des zeitlichen Verlaufs der Leistung eines Laserstrahls über einen möglichst weiten Frequenzbereich bzw. eine große Bandbreite der Leistungsänderungen von Bedeutung. Es ist bekannt, wenige Promille der Strahlungsleistung im Resonator durch einen Endspiegel auszukoppeln und mit einer wassergekühlten Strahlfalle zu messen, die im wesentlichen aus einem die Laserstrahlung absorbierenden gekühlten schwarzen Gehäuse besteht, an dem Thermoelemente so angebracht sind, daß sie eine der Leistung der auftreffenden Laserstrahlung proportionale Spannung abgeben. Diese kann über einen Verstärker zur Leistungsanzeige verwendet werden. Die bekannte Vorrichtung hat jedoch eine relativ große Wärmekapazität. Infolgedessen kann die abgegebene Spannung zeitlichen Änderungen der Strahlungsleistung nur sehr langsam folgen. Die Zeitkonstante liegt im Bereich von mehr als 10 Sekunden. Die bekannte Anordnung ist daher zur Messung schneller Leistungsänderungen nicht geeignet.

Aus der DE-B-30 02 558 ist eine Vorrichtung mit den eingangs genannten Merkmalen bekannt. Die beiden Detektoren sind Fotodioden. Die Empfindlichkeit dieser bekannten Vorrichtung ist aufgrund ihres physikalischen Aufbaus relativ stark von der Wellenlänge der einfallenden Strahlung abhängig. Infolgedessen ist es erforderlich, die Fotodioden der bekannten Vorrichtung gegen geeignete andere auszutauschen oder zumindest eine Kalibrierung vorzunehmen, wenn Strahlung mit anderen Wellenlängen oder Wellenlängenanteilen gemessen werden muß. Daher ist die bekannte Vorrichtung im Prinzip nur für einen durch die Wellenlänge der Laserstrahlung begrenzten Meßbereich verwendbar.

Aus Sensors and Actuators, Band 5, Nr.3, Mai 1984, Elsevier Sequoia (Lausanne, CH) A:Shaulov: "Broad band infrared thermal detector", S. 207-215, sind Detektoren für die $CO_2$-Laserstrahlung bekannt, die auf unterschiedlichen physikalischen Funktionsprinzipien beruhen. Es wird jedoch nicht aufgeführt, welche der genannten Detektoren verwendet werden sollen, um zugleich schnelle und langsame Leistungsänderungen erfassen zu können, und wie eine zusammenfassende Schaltung zur Auswertung der Meßergebnisse zweier Detektoren ausgebildet ist.

Der Erfindung liegt die Aufgabe zugrunde, eine Vorrichtung der eingangs genannten Art so zu verbessern, daß sie zur Messung sowohl des zeitlichen Mittelwertes als auch schneller Leistungsänderungen der Laserstrahlung geeignet ist, insbesondere für Infrarotlaser, wie Kohlendioxidlaser.

Diese Aufgabe wird dadurch gelöst, daß der erste Detektor ein pyroelektrischer und der zweite Detektor ein thermischer Detektor ist, und daß die die Meßsignale der Detektoren zusammenfassende Schaltung eine unterschiedliche Anwortverhalten der Detektoren korrigierende Entzerrerschaltung aufweist.

Um Leistungsänderungen in einem weiten Frequenzbereich erfassen zu können, ist es von Bedeutung, Detektoren unterschiedlicher Bandbreite für die zu erfassenden Strahlungsleistungsänderungen zu verwenden. Bei mehreren Detektoren muß jedoch dafür gesorgt werden, daß sie anteilig gleich bestrahlt werden. Das ist insbesondere nicht ohne weiteres gewährleistet, da die Laserstrahlung über den Querschnitt des Strahls inhomogene Intensitätsverteilungen aufweist. Das wird mit der erfindungsgemäß vorgesehenen, die Laserstrahlung örtlich integrierenden Einrichtung erreicht, welche die Laserstrahlung selbst beeinflußt. Für den Fall, daß die Detektoren in zeitlich unterschiedlicher Weise auf Strahlungsänderungen reagieren, weist die die Meßsignale der Detektoren zusammenfassende Schaltung die unterschiedliche Antwortverhalten der Detektoren korrigierende Entzerrerschaltung auf.

Um die örtliche Homogenisierung der Laserstrahlung zu erreichen, ist die Vorrichtung so ausgebildet, daß die die Laserstrahlung örtlich integrierende Einrichtung eine die Laserstrahlung in ein kleines Fenster einer Hohlkugel fokussierende Optik aufweist, und daß die Detektoren in einem ausschließlich von reflektierter Strahlung bestrahlten Bereich des Kugelinneren angeordnet sind, oder daß die integrierende Einrichtung im wesentlichen aus einer Streuscheibe besteht. Die in die Hohlkugel fokussierte Laserstrahlung erfährt eine vielfache diffuse Reflexion, so daß alle Flächenelemente der Innenfläche der Kugel, soweit sie nicht direkt durch die Laserstrahlung beaufschlagt werden, gleichstark bestrahlt werden. Infolgedessen werden die Detektoren im Verhältnis zueinander gleichmäßig belastet, so daß auch die von ihnen abgegebene Meßsignale in einem entsprechenden konstanten Verhältnis zueinander stehen. Die weitere Möglichkeit der Ausbildung einer örtlich integrierenden Einrichtung durch eine Streuscheibe hat zwar den Vorteil der größeren konstruktiven Einfachheit, weist jedoch erhöhte Absorbtionsverluste beim Durchtritt der Strahlung durch die Streuscheibe auf, was insbesondere für solche Detektoren nachteilig ist, die vergleichsweise große Meßleistung benötigen, um ein auswertbares Meßsignal erzeugen zu können.

Vorteilhafterweise ist der thermische Detektor eine aus einer Mehrzahl von Thermoelementen bestehende Thermosäule und der weitere Detektor ist ein pyroelektrischer Detektor wobei bedarfsweise ein Hoch- oder Tiefpaß vorhanden ist. Die Thermosäule besteht aus einer Reihenschaltung von miniaturisierten Thermoelementen, bei denen sich warme bzw. bestrahlte Kontaktstellen des Detektors mit kalten auf dem Temperaturniveau des Gehäuses befindlichen Kontaktstellen abwechseln. Es wird eine Ausgangsspannung erzeugt, die proportional der Temperaturdifferenz zwischen der Detektorfläche und dem Gehäuse ist. Die aktive Detektorfläche hat eine vergleichsweise geringe Wärmekapazität, so daß das Spannungssignal am Ausgang der Thermosäule vergleichsweise schnell auf eine Änderung der Leistung der auftreffenden Infrarotstrahlung reagieren kann. Der Frequenzgang beträgt z.B. 0 bis 20 Hz. Der pyroelektrische Detektor weist einen Kristall auf, der bei Temperaturänderungen entgegengesetzte Ladungen an seinen Kontaktflächen zeigt. Das damit erzeugte Meßsignal ist ein Maß für die letztere erzeugende Strahlungsleistung. Der pyroelektrische Detektor reagiert sehr schnell auf Änderungen der Strahlungsintensität, so daß er eine entsprechend große Bandbreite hat. Der Frequenzgang beträgt z.B. 10 Hz bis 300 kHz. Infolgedessen decken die beiden Detektoren unterschiedliche Frequenzbereiche ab und die zusammenfassende Schaltung erzeugt ein Ausgangssignal, das z.B. den Bereich von 0 bis 300 kHz der Leistungsänderungen erfaßt.

Vorteilhafterweise sind der thermische Detektor und der pyroelektrische Detektor mit gleichen Zeitkonstanten ausgebildet, oder bei Detektoren mit ungleichen Zeitkonstanten sind erstere aufeinander abstimmende Zeitglieder vorhanden. In beiden Fällen haben die Detektoren gleiches zeitliches Vehalten, so daß im Prinzip eine einfache Addition der Meßsignal durch die zusammenfassende Schaltung genügt, um zu einem für alle erfaßten Leistungsänderungen repräsentativen Ausgangssignal zu kommen.

Die Vorrichtung ist zweckmäßigerweise so ausgebildet, daß die Entzerrerschaltung einen Addierer aufweist, der das Ausgangssignal der zusammenfassenden Schaltung liefert und an dessen einen Eingang ein das Meßsignal des pyroelektrischen Detektors liefernder Proportionalzweig und an dessen anderen Eingang eine die Meßsignale beider Detektoren integrierende Schaltung angeschlossen ist.

Die zusammenfassende Schaltung besteht überlicherweise aus Bauteilen, z.B. aus Halbleiterbauteilen, deren Spannungen thermisch bedingt driften. Das führt infolge des integrierenden Verhaltens der die Meßsignale der Detektoren zusammenfassenden Schaltung zu fehlerhaften Ausgangssignalen. Hinzu kommen beispielsweise auch Störeinflüsse durch das unvermeidbare thermisch bedingte Rauschen des pyroelektrischen Detektors. Um derartige Fehlbeeinflussungen des Ausgangssignals zu vermeiden, ist die zusammenfassende Schaltung mit einer ihr Ausgangssignal rückkoppelnden Schaltung versehen. Speziell weist die Rückkopplungsschaltung einen invertierenden Operationsverstärker und einen dessen Ausgangssignal und das Meßsignal des Thermodetektors dem Eingang der Integrationsschaltung der Entzerrerschaltung zuleitenden Proportional-Integral-Regler auf. Es erfolgt also ein Vergleich dieses Ausgangssignals mit dem Meßsignal des thermischen Detektors über einen PI-Regler, der die infolge der Störung entstandene Differenz auf den Eingang des Entzerrers zurückführt, so daß sich die Störungen nicht verfälschend auf das Ausgangssignal auswirken können.

Die Erfindung wird anhand eines in der Zeichnung dargestellten Ausführungsbeispiels näher erläutert. Es zeigt:

Fig.1    eine die Laserstrahlung örtlich integrierende Einrichtung,

Fig.2    ein Blockschaltbild einer die Meßsignale der Detektoren zusammenfassende Schaltung zur Erzeugung eider Strahlungsleistung entsprechenden Ausgangssignals,

Fig.3    die Abhängigkeit des Ausgangssignals der erfindungsgemäßen Schaltung von der Frequenz, und

Fig.4    eine detaillierte Darstellung der Schaltung der Fig.2.

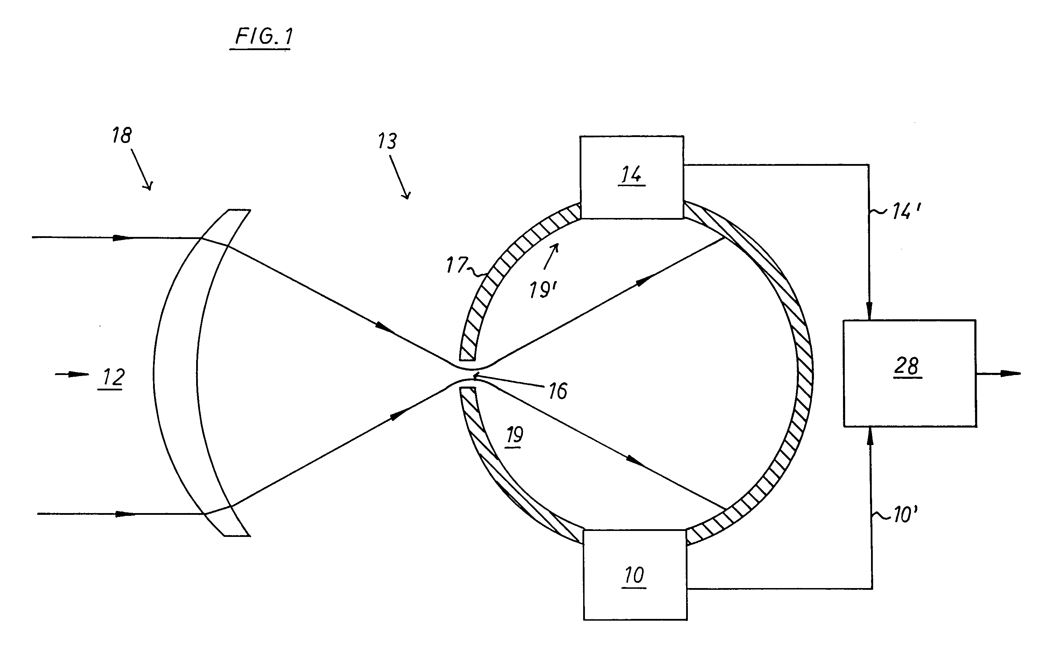

Fig. 1 zeigt Laserstrahlung 12, die beispielsweise mit einem teiltransmissiven Endspiegel eines Laserresonators ausgekoppelt wurde und deren Leistung der Gesamtleistung der insgesamt ausgekoppelten Laserstrahlung proportional ist. Die Strahlung 12 besitzt auch dieselbe örtliche modenbedingte Intensitätsverteilung. Die Laserstrahlung 12 gelangt zu einer Fokussieroptik 18, deren Fokus im Bereich eines kleinen Fensters 16 einer Hohlkugel 17 liegt. Infolgedessen wird die Laserstrahlung 12 in das Innere 19 der Hohlkugel 17 fokussiert und erfährt dort Vielfachreflexionen. Die Hohlkugel 17 entspricht einer Ulbrichtkugel, die sonst als Kugelfotometer eingesetzt wird. Innerhalb der Hohlkugel 17 wird die Laserstrahlung vielfach in, auf die einzelnen Strahlquerschnittsanteile bezogen, unterschiedlichen Richtungen reflektiert, so daß sich eine integrierende Wirkung im Sinne einer Vergleichmäßigung der Intensitätsverteilung der Strahlung ergibt. Dadurch ist gewährleistet, daß der zeitliche Verlauf der einfallenden Infrarotstrahlung an der Innenwand der Hohlkugel identisch und zur Leistung des Laserstrahls proportional ist.

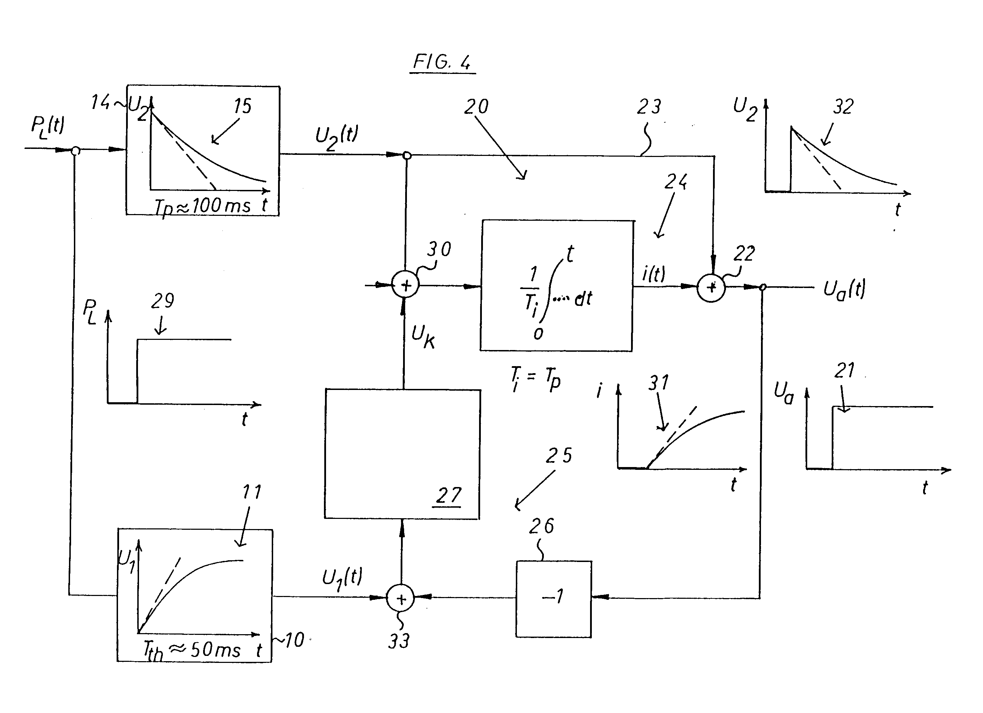

An die Hohlkugel 17 sind Detektoren 10, 14 so angeschlossen, daß ihre Detektorflächen in ausschließlich von reflektierter Strahlung bestrahlten Bereichen 19' des Kugelinneren 19 liegen. Die Ausgangssignale dieser Detektoren 10, 14 werden über entsprechende Ausgangsleitungen 10', 14' einer Schaltung 28 zugeleitet, welche Meßsignale 11, 15, vergl. Fig. 4, der Detektoren 10, 14 zusammenfaßt und ein Ausgangssignal zur Verfügung stellt, welches den Strahlungsänderungen proportional ist.

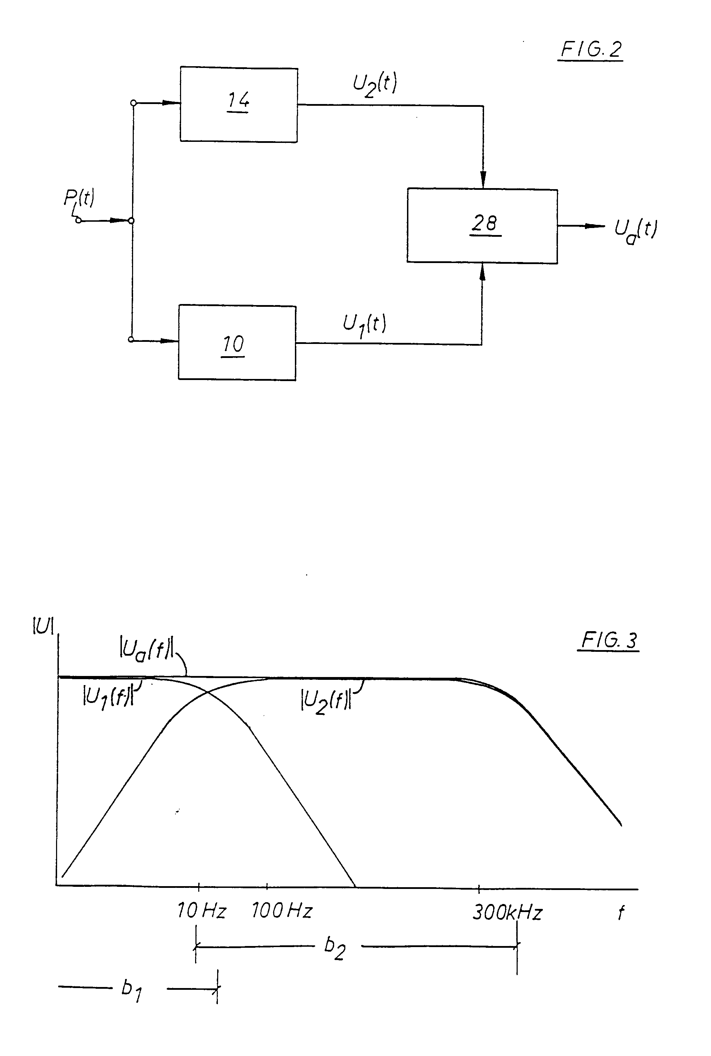

Gemäß Fig. 2 ist der Detektor 10 ein thermischer Detektor, der bei einer Leistungsänderung $P_L$ (t) der Leistung des Laserstrahls 12 ein Meßsignal 11 als Spannung $U_1$ (t) abgibt. Der thermische Detektor 10 ist vorteilhafterweise eine Thermosäule, die aus mehreren, in Reihe geschalteten miniaturisierten Thermoelementen besteht und eine vergleichsweise geringe Wärmekapazität ihrer aktiven Fläche aufweist. Aufgrund dessen steht das Meßsignal 11 des thermischen Detektors 10 vergleichsweise schnell zur Verfügung, und zwar können ohne weiteres Leistungsänderungen im Bereich von 0 bis 20 Hz erfaßt werden. Diese entsprechende Bandbreite b1 ist aus Fig. 3 ersichtlich, in der die Spannung /U/ in Abhängigkeit von der Frequenz f aufgetragen ist. Es ist ersichtlich, daß Leistungsschwankungen, die schneller als mit 100 Hz auftreten, von dem thermischen Detektor 10 zunehmend nicht mehr bzw. nicht mehr zuverlässig erfaßt werden können. Dies wird mit dem weiteren Detektor 14 erreicht, der als pyroelektrischer Detektor ausgebildet ist und bei einer Leistungsänderung $P_L$(t) ein Meßsignal 15 als $U_2$ (t) liefert, und zwar gemäß Fig. 3 im Bereich einer Bandbreite b2 von wenigen Hz bis zu mehreren 100 kHz.

Der pyroelektrisch wirkende Detektor 14 besteht im wesentlichen aus einem Kristall, der von der auftreffenden Laserstrahlung entsprechend deren Leistungsschwankungen sehr schnell erwärmt werden kann und daraufhin entsprechende elektrische Ladungen an seinen Kontaktflächen influenziert, die abgegriffen werden und dann das Meßsignal 15 erzeugen, vergl. Fig. 4. Der Abgriff der Ladungen erfolgt zweckmäßigerweise über einen Stromspannungswandler, dessen Eingangswiderstand im Idealfall unendlich klein ist. Infolgedessen ist auch die Entladungsdauer des Kristalls unendlich klein, weil diese durch die Zeitkonstante des Entladungskreises bestimmt wird, welche außer durch den Widerstand des Stromspannungswandlers nur noch durch die Eigenkapazität des pyroelektrischen Detektors beeinflußt wird. Diese wird durch den Stromspannungswandler praktisch kurzgeschlossen, so daß der Frequenzgang praktisch nicht beschränkt wird. Die obere Grenzfrequenz des Detektors 14 und damit des gesamten Meßsystems wird nur durch die Beschaltung des Detektors begrenzt, welche den durch den Detektor verursachten kleinen Strom in die Spannung $U_2$ (t) umwandelt und verstärkt. Die untere Grenzfrequenz des $U_2$ (t) wird durch die thermische Zeitkonstante des pyroelektrischen Detektors 14 bestimmt. Für das gesamte Meßsystem ergibt sich der Verlauf des Ausgangssignals $U_a$ gemäß Fig. 3 zu /$U_a$ (f)/. $U_a$ ist also der Strahlleistung über einen Bereich von 0 bis etwa 300 kHz proportional. Diese Bandbreite kann auch durch einen Tiefpaß beschränkt werden, um ein Signal für die digitale Leistungsanzeige am Laser zur Verfügung zu stellen.

In Fig. 4 wird das zeitliche Verhalten der Detektoren 10, 14 erläutert. Für die Erzeugung des Ausgangssignals $U_a$(t) wird davon ausgegangen, daß die Ausgangspegel der Detektoren 10, 14 aufeinander abgeglichen sind. Nimmt man an, daß eine Laserleistungsänderung gemäß Sprung 29 auf die Detektoren 10, 14 gegeben wird, so erzeugt der thermoelektrische Detektor 10, der ein Tiefpaßverhalten aufweist, ein Meßsignal 11 als Antwort auf den Sprung 29. Der thermische Detektor verzerrt also das Signal $P_L$(t) aufgrund seiner thermischen Trägheit. Die entsprechende Sprungantwort des pyroelektrischen Detektors 14 zeigt das aus dem Meßsignal 15 ersichtliche Hochpaßverhalten. Der pyroelektrische Detektor 14 verzerrt das Signal $P_L$-(t) wie dargestellt, weil die Polarisation des Kristalls temperaturänderungsabhängig ist. Trifft auf einen pyroelektrischen Kristall eine Strahlung konstanter Leistung, so würde sich infolgedessen ein thermisches Gleichgewicht einstellen, ohne daß weitere Ladungsträger für ein Meßsignal an den Kontaktflächen des Kristalls erzeugt würden. Der Detektor 14 ergibt also kein Meßsignal, das für den Gleichanteil der Strahlungsleistung repräsentativ wäre. Auch die durch diesen Detektor 14 erzeugte Verzerrung des Eingangssignals $P_L$(t) muß durch die zusammenfassende Schaltung 28 berücksichtigt werden.

Der Vergleich des zeitlichen Verlaufs der Spannungen $U_1$ (t) und $U_2$ (t) ergibt, daß sich beide durch Addition zu der Sprungform des Eingangssignals ergänzen würden, wenn die Zeitkonstanten $T_p$ und $T_{th}$ gleich groß wären. In diesem Fall würde also eine einfache Addition genügen, um zu dem bei 21 dargestellten zeitlichen Verlauf des Ausgangssignals $U_a$ (t) zu kommen, welcher dem zeitlichen Verlauf des Eingangssignals $P_L$(t) gemäß 29 entspricht. In der Regel werden geeignete Detektoren 10, 14 jedoch unterschiedliche Zeitkonstanten ihrer Sprungantworten aufweisen, z. B. wie angegeben. In diesem Fall wäre es möglich, daß die beiden Detektoren mit diese Zeitkonstanten aufeinander abstimmenden Zeitgliedern beschaltet werden. Beispielsweise kann der thermische Detektor 10 mit einem Filter beschaltet werden, das an seinem Ausgang eine verlangsamte Tiefpaß-Sprungantwort ausgibt. In einem solchen Fall, wenn die Ausgleichszeitkonstanten der Detektoren 10, 14 gleich groß sind, genügt ebenfalls die Addition der beiden Signale $U_1$ (t), und $U_2$ (t), um ein Signal $U_a$ (t) entsprechend dem zeitlichen Verlauf der Eingangsgröße $P_L(t)$ zu erzeugen.

Das tatsächliche Verhalten der Detektoren 10, 14 entspricht aber nicht dem vorbeschriebenem idealen Verhalten, so daß der in Fig. 4 dargestellte Entzerrer 23 erforderlich ist, der im wesentlichen aus einem Proportionalzweig 20 und aus einer integrierenden Schaltung 24 besteht, die an die Eingänge eines Addierers 22 angeschlossen sind, der das Ausgangssignal $U_a$ (t) liefert. Demgemäß wird $U_2$ (t) über den Proportionalzweig 23 direkt auf den Addierer 22 gegeben, zugleich aber auch auf einen weiteren Addierer 30, an dessen anderen Eingang ein Signal $U_k(t)$ gelegt wird. Dieses Signal entspricht einer Korrekturkomponente zur Kompensation etwaiger Störgrößen n(t) am Addierer 30. Der Addierer 30 ist mit seinem Ausgang an die Integrierschaltung 24 so angeschlossen, wobei die Zeitkonstante $T_i$ = $T_p$ ist. Unter dieser Bedingung liefert die integrierende Schaltung 24 ein Signal i(t) entsprechend der Darstellung bei 31. Der Vergleich der Darstellungen 32 bezüglich $U_2$ (t) und 31 bezüglich i(t) ergibt, daß der Addierer 22 das gewünschte Proportionalsignal herstellt, so daß also die Kombination von Proportional- und Integralzweig 23, 24 die inverse Übertragungsfunktion des pyroelektrischen Detektors bildet, sofern die Zeitkonstante $T_i$ der integrierenden Schaltung 24 mit der thermischen Zeitkonstanten $T_p$ des Detektors 14 übereinstimmt.

Wenn das Verhalten des pyroelektrischen Detektors 14 dem im Ersatzschaltbild dargestellten Verhalten entspräche und das System völlig ungestört wäre, wäre eine Korrekturschaltung nicht mehr erforderlich. Außer den Ungenauigkeiten bei der Modellbildung ist beispielsweise das thermische Rauschen des pyroelektrischen Detektors 14 eine unvermeidbare Störquelle. Auch bei den verwendeten Operationsverstärkern, z. B. 22, sind Störungen durch Offsetspannungen infolge thermischer Drifterscheinungen unvermeidbar. Diese werden durch die integrierende Schaltung 24 ebenso aufintegriert, wie das an sich mittelwertfreie Rauschen des pyroelektrischen Detektors 14 zu einer mittelwertbehafteten Störung aufintegriert wird. Infolgedessen driftet die Spannung $U_a(t)$ bzw. das Ausgangssignal statistisch in immer größerer Amplituden und würde schließlich an die durch die Versorgungsspannung der Schaltung gegebenen Grenzen stoßen. Um diese nachteiligen Wirkungen zu vermeiden, wird in der zusammenfassenden Schaltung 28 eine Rückkopplungsschaltung 25 eingesetzt. Bei dieser Schaltung wird das Ausgangssignal $U_a(t)$ über einen invertierenden Operationsverstärker 26 von der Spannung $U_1$ (t) über den Addierer 33 subtrahiert, dessen Ausgang an einen Proportional-Integral-Regler 27 angeschlossen ist, der seinerseits unter Erzeugung der Spannung $U_k$-(t) an einen Eingang des Addierers 30 angeschlossen ist. Durch diese Rückkopplungsschaltung 25 wird das Ausgangssignal $U_a(t)$ mit dem Meßsignal $U_1$ (t) des thermischen Detektors 10 verglichen und bei einer Differenz mit Hilfe des PI-Reglers 27 ein negativer Korrekturwert erzeugt, der die zur Erläuterung angegebene Störgröße n(t) kompensiert. Durch das Aufzwingen des Mittelwerts des Meßsignals $U_1$ (t) auf das Ausgangssignal $U_a$ (t) werden also die sonst am Ausgang des Entzerrers mit fortschreitender Zeit immer größeren Ungenauigkeiten ausgeschaltet. Über den Proportionalzweig des Reglers 27 kann darüber hinaus die Dynamik beim Einschwingen verbessert werden. Bei dieser Korrekturschaltung wird der thermische Detektor 10 zur Beseitigung der Störgröße benutzt und stellt für die Regelschaltung den Sollwert zur Verfügung.

Gewerbliche Verwertbarkeit

Die Vorrichtung überwacht durch Messung sowohl den zeitlichen Mittelwert als auch schnelle Leistungsänderungen von Infrarot- und Kohlendioxidlasern.

**Patentansprüche**

1. Vorrichtung (13) zur Messung der Strahlungsleistung von Lasern, insbesondere von Infrarotlasern, mit einer die Laserstrahlung (12) örtlich integrierenden Einrichtung, die zwei Detektoren (10,14) aufweist, von denen der erste eine gegenüber dem zweiten hohe Grenzfrequenz hat, und die jeweils für einen unterschiedlichen Frequenzbereich der Laserleistungsänderung dem auf sie entfallenden Strahlungsanteil entsprechende Meßsignale (11,15) abgeben, und mit einer zusammenfassenden Schaltung (28) für diese Meßsignale (11,15), dadurch gekennzeichnet, daß der erste Detektor (14) ein pyroelektrischer und der zweite Detektor (10) ein thermischer Detektor ist, und daß die die Meßsignale (11,15) der Detektoren (10,14) zusammenfassende Schaltung (28) eine unterschiedliche Antwortverhalten der Detektoren (10,14) korrigierende Entzerrerschaltung (20) aufweist.

2. Vorrichtung nach Anspruch 1, dadurch gekennzeichnet, daß die die Laserstrahlung (12) örtlich integrierende Einrichtung (13) eine die Laserstrahlung (12) in ein kleines Fenster (16) einer Hohlkugel (17) fokussierende Optik (18) aufweist, und daß die Detektoren (10,14) in einem ausschließlich von reflektierter Strahlung bestrahlten Bereich (19') des Kugelinneren (19) angeordnet sind, oder daß die integrierende Einrichtung im wesentlichen aus einer Streuscheibe besteht.

3. Vorrichtung nach einem der Ansprüche 1 oder 2, **dadurch gekennzeichnet**, daß der thermische Detektor (10) eine aus einer Mehrzahl von Thermoelementen bestehende Thermosäule ist, und daß bedarfsweise ein Hoch- oder Tiefpaß vorhanden ist.

4. Vorrichtung nach Anspruch 3, **dadurch gekennzeichnet**, daß der thermische Detektor (10) und der pyroelektrische Detektor (14) mit gleichen Zeitkonstanten ausgebildet sind, oder daß bei Detektoren (10,114) mit ungleichen Zeitkonstanten diese aufeinander abstimmende Zeitglieder vorhanden sind.

5. Vorrichtung nach Anspruch 1, **dadurch gekennzeichnet**, daß die Entzerrerschaltung (20) einen Addierer (22) aufweist, der das Ausgangssignal ($U_a(t)$) der zusammenfassenden Schaltung (28) liefert und an dessen einen Eingang ein das Meßsignal (15) des pyroelektrischen Detektors (14) liefernder Proportionalzweig (23) und an dessen anderen Eingang eine die Meßsignale (11,15) beider Detektoren (10,14) integrierende Schaltung (24) angeschlossen ist.

6. Vorrichtung nach einem oder mehreren der Ansprüche 1 bis 5, **dadurch gekennzeichnet**, daß die zusammenfassende Schaltung (28) eine Rückkopplungsschaltung (25) aufweist, mit der das Ausgangssignal ($U_a(t)$) und das Meßsignal (11) des Thermodetektors (10) zusammengefaßt einem Proportional-Integral-Regler (27) zugeleitet werden.

7. Vorrichtung nach Anspruch 6, **dadurch gekennzeichnet**, daß die Rückkopplungsschaltung (25) das Ausgangssignal ($U_a(t)$) über einen invertierenden Operationsverstärker (26) von dem Meßsignal (11) des Thermodetektors (10) über einen Addierer (33) subtrahiert dem Proportional-Integral-Regler (27) zuführt.

**Claims**

1. Apparatus (13) for the measurement of the radiation power of lasers, particularly of infrared lasers, comprising a device integrating the laser radiation (12) locally and which comprises two detectors (10, 14), the first of which has a high cut-off frequency relative to the second, and which generate, each for a different frequency range of the laser power variation, respective measuring signals (11, 15) corresponding to the radiation components falling thereon, and a combining circuit (28) for these measuring signals (11, 15), characterised in that the first detector (14) is a pyroelectric detector and the second detector (10) is a thermal detector, and that the circuit (28) combining the measuring signals (11,15) of the detectors (10, 14) includes a compensating circuit (20) which corrects for varying response behaviour of the detectors (10, 14).

2. Apparatus according to claim 1, characterised in that the device (13) integrating the laser radiation (12) locally comprises an optical means (18) focusing the laser radiation (12) into a small window (16) of a hollow sphere (17), and that the detectors (10, 14) are arranged in a region (19') of the interior (19) of the sphere which is irradiated only by reflected radiation, or that the integrating device consists essentially of a scattering plate.

3. Apparatus according to one of claims 1 or 2, characterised in that the thermal detector (10) is a thermopile consisting of a plurality of thermocouple elements, and that a high-pass or low-pass filter is provided as necessary.

4. Apparatus according to claim 3, characterised in that the thermal detector (10) and the pyroelectric detector (14) have the same time constants, or that, for detectors (10, 14) with unequal time constants, timing elements are provided which balance these in relation to each other.

5. Apparatus according to claim 1, characterised in that the compensating circuit (20) comprises an adder (22) which supplies the output signal ($U_a(t)$) of the combining circuit (28) and to whose one input is connected a proportional circuit (23) supplying the measuring signal (15) of the pyroelectric detector (14) and to whose other input is connected a circuit (24) integrating the measuring signals (11,15) of both detectors (10, 14).

6. Apparatus according to one or more of claims 1 to 5, characterised in that the combining circuit (28) comprises a feedback circuit (25) by which the output signal ($U_a(t)$) and the measuring signal (11) of the thermal detector (10) are fed in combined manner to a proportional-integral controller (27).

7. Apparatus according to claim 6, characterised in that the feedback circuit (25) feeds to the proportional-integral controller (27) the output signal ($U_a(t)$) by means of an inverting operational amplifier (26) subtracted from the measuring signal (11) of the thermal detector (10) by means of an adder (33).

**Revendications**

1. Dispositif (13) pour mesurer la puissance de rayonnement de lasers, en particulier de lasers à infra-rouges, comportant un appareil qui intègre localement le rayonnement laser (12) et comprend deux détecteurs (10, 14) dont le premier présente une fréquence limite élevée par rapport au second, et qui émettent des signaux de mesure (11, 15) correspondant, pour une gamme de fréquences différente de la variation de puissance de laser, à la part de rayonnement leur revenant, et comportant un circuit de réunion (28) pour ces signaux de mesure (11, 15), caractérisé en ce que le premier détecteur (14) est un détecteur pyroélectrique tandis que le second détecteur (10) est un détecteur thermique, et en ce que le circuit (28) réunissant les signaux de mesure (11, 15) des détecteurs (10, 14) présente un circuit correcteur (20) qui corrige des comportements de réponse différents des détecteurs (10, 14).

2. Dispositif selon la revendication 1, caractérisé en ce que l'appareil (13) intégrant localement le rayonnement laser (12) présente un système optique focalisant celui-ci dans une petite fenêtre (16) d'une sphère creuse (17), et en ce que les détecteurs (10, 14) sont disposés dans une zone (19') de l'intérieur (19) de la sphère exposée exclusivement à un rayonnement réfléchi, ou en ce que le dispositif d'intégration se compose essentiellement d'un diffuseur.

3. Dispositif selon l'une des revendications 1 ou 2, caractérisé en ce que le détecteur thermique (10) consiste en une colonne thermométrique composée d'une multiplicité de thermocouples, et en ce qu'il est prévu au besoin un filtre passe-haut ou passe-bas.

4. Dispositif selon la revendication 3, caractérisé en ce que le détecteur thermique (10) et le détecteur pyroélectrique (14) sont conçus avec des constantes de temps égales, ou en ce que, dans le cas de détecteurs (10, 114) à constantes de temps différentes, il est prévu des organes de temporisation qui accordent celles-ci l'une par rapport à l'autre.

5. Dispositif selon la revendication 1, caractérisé en ce que le circuit correcteur (20) comporte un additionneur (22) qui fournit le signal de sortie ($U_a(t)$) du circuit de réunion (28) et à une première entrée duquel est relié un branchement proportionnel (23) fournissant le signal de mesure (15) du détecteur pyroélectrique (14), tandis qu'à sa seconde entrée est relié un circuit (24) intégrant les signaux de mesure (11, 15) des deux détecteurs (10, 14).

6. Dispositif selon l'une au moins des revendications 1 à 5, caractérisé en ce que le circuit de réunion (28) comporte un circuit de rétroaction (25) à l'aide duquel le signal de sortie ($U_a(t)$) et le signal de mesure (11) du détecteur thermique (10) sont transmis, réunis, à un régulateur proportionnel et intégral (27).

7. Dispositif selon la revendication 6, caractérisé en ce que le circuit de rétroaction (25) transmet au régulateur proportionnel et intégral (27), par l'intermédiaire d'un amplificateur opérationnel d'inversion (26), le signal de sortie ($U_a(t)$) soustrait du signal de mesure (11) du détecteur thermique (10) par l'intermédiaire d'un additionneur (33).

FIG.1

EP 0 419 525 B1

*FIG.2*

*FIG. 3*

FIG. 4

$P_L(t)$

$14 \sim U_2$  15

$T_p \approx 100\,ms$  $t$

$U_2(t)$

20  23

$U_2$  32  $t$

$P_L$  29  $t$

30

24

$\frac{1}{T_i}\int_0^t \cdots dt$  $i(t)$

22

$U_a(t)$

$U_k$

$T_i = T_p$

27

25

26

$i$  31  $t$

$U_a$  21  $t$

11

$U_1$

$T_{th} \approx 50\,ms$  $t$  $\sim 10$

$U_1(t)$

33

$-1$

EP 0 419 525 B1